# EUROPEAN PATENT SPECIFICATION

(11) **EP 2 153 251 B1**
(45) Date of publication and mention of the grant of the patent: **09.03.2011**
(21) Application number: 07790109.8
(22) Date of filing: 30.05.2007
(51) Int. Cl.: G01W 1/16

(54) **A DEVICE FOR MONITORING LIGHTNINGS FROM A GEOSTATIONARY ORBIT**
EINRICHTUNG ZUR ÜBERWACHUNG VON BLITZSCHLÄGEN VON EINEM GEOSTATIONÄREN ORBIT AUS
APPAREIL DE SURVEILLANCE DES ÉCLAIRS À PARTIR D'UN ORBITE GÉOSTATIONNAIRE

(43) Date of publication of application: 17.02.2010
(73) Proprietor: SELEX GALILEO S.P.A., 50013 Campi Bisenzio (FI) (IT)
(72) Inventor: ROMOLI, Andrea, 50132 Firenze (IT)
(74) Representative: Mannucci, Michele
(86) International application number: PCT/IT2007/000377
(87) International publication number: WO 2008/146313

(56) References cited:
- TOMMASI L ET AL: "Design and Performance of the Lightning Imager for the Meteosat Third Generation" INTERNATIONAL CONFERENCE ON SPACE OPTICS PROCEEDINGS, XX, XX, June 2006 (2006-06), pages 1-6, XP008088753 cited in the application

## Description

### Technical Field

The present invention relates to a device or system for monitoring lightnings from a satellite, in particular, a satellite orbiting in a geostationary orbit.

More in particular, the present invention relates to the optical part of such a monitoring system.

### State of the Art

The observation of meteorological phenomena, among them the generation of electrical discharges in the atmosphere, is one of the activities that are performed by the apparatuses installed on satellites in orbit around our planet. The satellites whereon instruments serving this function are positioned observe the Earth from a geostationary orbit.

A discussion of the salient aspects of devices and systems of this kind is contained in Hugh J. Christian et al: The Detection of Lightning From Geostationary Orbit, in Journal of Geophysical Research, Vol. 94, no. D11, pages 13329-13337, September 1989.

In some cases, the requirement is to observe with a single instrument only a portion of the planet, but in other cases the requirement is to observe the entire visible surface of the planet. In this case, the circular field of view observed has to cover a diameter of about 16 degrees. The system must be able to observe the Earth's surface in a very narrow band of wavelengths, with band centre at 777.4 nm and bandwidth 0.34 nm, which matches the spectral marking of lightnings. Such a narrow band selection is obtained by means of interference filters, which can accommodate variations of no more than 10° in the angle of incidence. These angles are smaller than half the field of view if the observation of the entire surface of the Earth is required.

It therefore becomes necessary to divide the field of view in four parts and for each of them separate optics are provided; with a respective detector. Multi-channel systems with separate optics for each channel are described for example in Leonardo Tommasi et al., Design and Performance of the Lightening Imager for the Meteosat Third Generation, Proc. 6th Internat. Conf. On Space Optics, ESTEC, Noordwijk, The Netherlands, 27-30 June 2006.

Since the intensity of the phenomena to be observed is very weak with respect to that of the sun, to observe the Earth and detect atmospheric discharge phenomena even when the sun rises or sets relative to the observation point, a system is required for rejecting stray light, the so-called baffling, which enables the system to operate even in the aforesaid conditions assuming a pointing direction that excludes a small crescent of the terrestrial edge from the part where the sun is present.

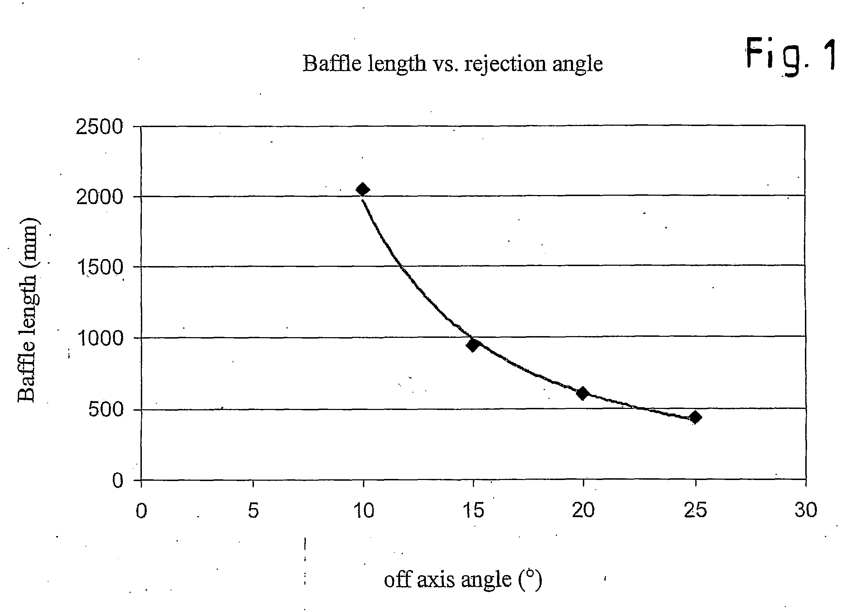

A traditional baffling system, positioned in front of each of the objectives, is incapable of meeting these requirements and in any case it implies excessively large dimensions for the screen or baffle. Figure 1 shows the value of the length of a traditional baffle versus the semi-angle of rejection. An angle of rejection of the stray light of 20°, which is anyway insufficient to meet the requirements indicated above, requires a 550 mm long baffle, a dimension that exceeds the length of the optics positioned between the baffling system and the detector. Smaller rejection angles thus cannot in practice be reached with shields or baffles positioned in front of the primary objective of the device.

### Objects and Summary of the Invention

An object of the present invention is to provide a device or system for monitoring lightnings from a geostationary orbit that presents a more efficient system for rejecting stray light.

An object of an embodiment of the invention is to provide a device of the type mentioned above, which allows to obtain more limited rejection angles with reduced bulk with respect to those obtainable with traditional baffling systems.

An object of an improved embodiment of the invention is to provide a system of the type mentioned above that presents a single primary objective for a plurality of separate detectors, instead of a plurality of primary objectives, one for each detector.

According to an aspect of the invention, in a lightning monitor comprising a plurality of detectors (each of which receives a portion of an image observed by the device), along the optical path between at least one primary objective and each of the detectors is provided at least one field stop positioned substantially in the focal plane of the primary objective, which selects for a respective detector a portion of the image observed by the device. For each detector moreover, relay optics are provided for relaying each portion of image from the focal plane to the corresponding detector.

The field stop, in combination with the image relay system, enables to attenuate the residual radiation diffused by the walls of the primary objective and by the absorbing/reflecting stops positioned before the field stop, limiting the stray light that reaches the detector. With this arrangement, a high stray light-rejection efficiency is obtained with no need to use heavy and bulky baffles positioned in front of the objective.

In one embodiment, the invention provides for a device comprising a plurality of channels, e.g. four channels, to define four fields of view, each of which collects a portion of the entire image of the planet. Each channel presents a primary objective, a field stop positioned substantially in the focal plane of the objective, relay optics and a detector. In an appropriate position, e.g. in front of the primary objective, in each channel is appropriately located a narrow band filter, typically an interference filter, centered on the band corresponding to the spectral marking of lightnings.

In a different embodiment, the device presents a single primary objective and a system for splitting the beams at the input of said objective into multiple fields of view, each corresponding to a channel of the device. With each channel is associated a respective detector with relay optics to relay the image from the focal plane of the primary objective to the detector. A single relay optics or relay objective can be provided for each channel, in which case the optics relays the image from the focal plane of the primary objective directly on the detector. However, it is also possible to provide more than one field stop for each channel and one or more relay optics between the various field stops and between the last field stop and the detector.

In a practical embodiment, the split into multiple fields of view is obtained with a plurality of mirrors or other bending or reflecting elements, which split the incoming beams sending them towards different optical paths, each provided with a detector and with relay optics. Depending on the position of the bending or reflecting elements along the optical path, a single field stop can be provided, with a plurality of openings in a number equal to the number of the fields of view and of the detectors, or a field stop can be provided for each bending element, positioning each stop between a respective bending element and the corresponding relay optics or objective for relaying the image from the image plane where the stop is located to the detector.

In one embodiment, with the shared objectives are associated band-pass filters in a number matching the number of detectors. Preferably, each band-pass filter is constituted by an interference filter obtained on a planar surface substantially orthogonal to the median ray of the corresponding field of view. The interference filter can be for example obtained on the face of a respective prism, or optical wedge, which deviates the beam at the input of the primary objective, or on a planar-parallel plate.

In a particularly advantageous possible embodiment of the invention, the shared primary objective comprises a Schmidt plate, a concave primary mirror and a convex secondary mirror. The Schmidt plate can be made of a single element, with which a stop is associated that delimits a plurality of fields of view corresponding to the single channels and hence to the single detectors of the device. With the Schmidt plate are associated interference filters formed for example on planar-parallel plates. These plates can be positioned for example in front of or behind the Schmidt plate. To reduce the variation of the angle of incidence of the beam of each field of view, said plates are preferably inclined in such a way that each one is orthogonal to the median ray of the respective field of view.

In a different embodiment, the Schmidt plate is subdivided into a plurality of portions, each of which presents a substantially planar surface whereon a corresponding interference filter is provided. The portions into which the Schmidt plate is subdivided define corresponding fields of view, with each of which is associated one of said detectors; and each portion of the Schmidt plate is oriented in such a way that the respective planar surface whereon the interference filter is formed is substantially orthogonal to the median ray of the corresponding field of view.

Hereafter, reference shall be made to a device that presents four channels. As indicated above, each of the four channels can comprise its own primary objective, but they will preferably have a shared primary objective and preferably four separate field stops, one for each channel, each preceded by a bending element like a mirror or a reflecting prism. However, it is also possible to provide devices with a higher number of channels, e.g. with·nine channels, defining nine distinct fields of view.

Furthermore, in the various configurations each channel can present a single field stop and a single relay optics to relay the image from the focal plane of the primary objective to the detector. However, a multi-stage system for filtering stray light can be provided, positioning for example a first field stop in the focal plane of the primary objective, a first relay optics, a second field stop in the focal plane of the primary objective, and an additional relay optics from this focal plane to the detector. The arrangement can be multiplied to obtain any number n of stages, compatibly with bulk requirements.

In an embodiment the field stop(s) are' treated with an absorbing-reflecting treatment or absorbing-diffusing treatment. The treatment can be such as to absorb at least 90% of incident radiation and preferably up to 98% of incident radiation. The treatment is preferably provided on both faces of the field stop(s). The term "absorbing-reflecting treatment" means a treatment whereby the fraction of incident radiation that is not absorbed is reflected, whilst the term "absorbing-diffusing treatment" means a treatment whereby the incident fraction that is not absorbed is diffused.

In an embodiment, the device comprises also for the, or for each primary objective, a pupil stop, preferably positioned substantially in the exit pupil of the primary objective or at a real image thereof. The pupil stop too is advantageously treated with a similar high efficiency absorbing-reflecting or absorbing-diffusing treatment, as indicated above for the field stop.

### Brief Description of the Drawings

The invention shall be better understood following the description and the accompanying drawing, which shows practical non limiting embodiments of the invention. More in particular, in the drawing:
Fig. 1 shows the length of a traditional baffle versus the angle of rejection of stray light;
Fig. 2 shows an outline diagram for a single channel of a device according to the invention;
Figs. 3A-3D schematically show the shape of the field stops for a four-channel device;
Fig. 4 shows the arrangement of two channels obtained according to the diagram of Fig. 2;
Fig. 5 shows the diagram of a channel obtained as in Fig. 2, but with a multiple stray light filtering stage;
Fig. 6 shows an outline diagram of a multi-channel device with a shared primary objective and a shared field stop;
Figs. 7A and 7B schematically show two alternative arrangements of four optical wedges corresponding to the four channels of the device of Fig. 6, each oriented to minimize the variation of the angle of incidence;
Fig. 7C schematically shows a pupil stop or baffle, positioned in front of the four wedges, associated to the primary objective of Fig. 6;
Fig. 8A schematically shows the field stop of the device of Fig. 6;
Fig. 8B schematically shows how the image of the Earth observed through the objective of Fig. 6 is split into four portions corresponding to the four fields of view on the focal plane of the primary objectives, where the stop of Fig. 8A is located, with the four apertures;
Fig. 9 shows an outline diagram of a multi-channel device with a shared primary objective and a plurality of field stops, one for each channel;
Fig. 10 shows a similar diagram to that of Fig. 9, with two different manners of construction and positioning of the interference filters;
Fig. 11A shows an embodiment variant of the primary objective;
Fig. 11B schematically shows how the device of Fig. 11A splits the image of the Earth into four portions rotated by 180° and with their position reversed relative to the optical axis of the primary objective;
Figs. 12 and 13 show two diagrams of further embodiments of the device according to the invention;
Figs. 14 and 15 show construction diagrams of the device according to the invention with the use of a Schmidt-Cassegrain primary objective; and
Fig. 16 shows an embodiment variant of the device of Figs. 14 and 15.

### Detailed Description of Embodiments of the Invention

According to a first embodiment, the invention comprises a device or system for monitoring lightnings comprising four distinct observation channels, to define four distinct fields of view and hence optimize the orientation of the optical axis of each channel relative to the normal to the surface of the interference filter of each single channel, and to have a smaller aperture of the field of view of each channel than the maximum permissible variation of the angle of incidence on the filter.

Each channel is constructed in such a way as to shield the stray light efficiently without using an external shield or baffle (shadow), positioned in front of the primary objective, obtaining a very small stray light angle of rejection, such as to meet the requirement of observation of the field of view even when the sun or the moon (or another source of stray light) is very close to the optical axis of the channel.

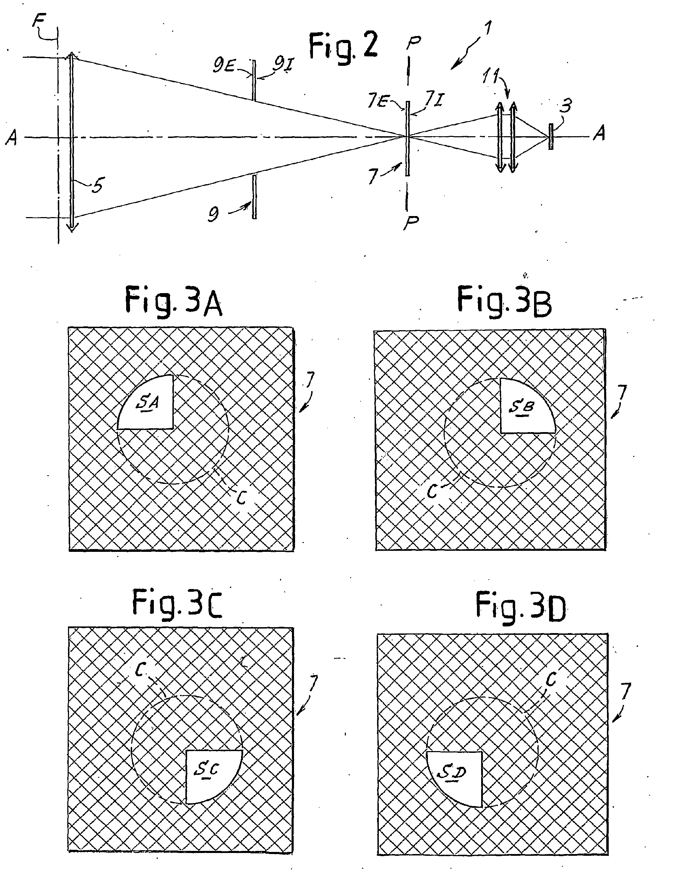

Fig. 2 shows the optical diagram of one of the four channels in this embodiment of the invention. The remaining three channels are configured substantially in the same way. The optics is indicated in its entirety by the number 1, and the number 3 indicates the detector, typically a CCD device or other sensor, known in itself and therefore not described. The imaging electronics are not described because they are not an object of the present invention and they are known by those skilled in the art.

In front of the detector 3 is positioned a primary objective indicated in its entirety, and schematically, by the number 5. This objective can have any kind of configuration, compatible with the functions which the device 1 has to perform. More in particular, the objective 5 can be dioptric, catoptric or catadioptric.

Along the optical axis A-A of the primary objective 5, between said primary objective 5 and the detector 3, a field stop 7 is positioned, that is located substantially in the plane of the image, schematically indicated by the letter P, of the primary objective 5. In the illustrated diagram, between the primary objective 5 and the field stop 7 is located a pupil stop 9 positioned substantially in the exit pupil Pu of the primary objective 5, or at a real image thereof.

To relay the image from the plane P-P to the detector 3, between the field stop 7 and the detector 3 is positioned a relay optics, schematically indicated by the number 11. This relay optics or system can have an image reduction ratio that is typically, but not necessarily, 1:1.5.

With the optics of Fig. 2 stray light rejection angles are obtained, which are very close to the semi-aperture angle of the field of view of the optics even without using external baffles. In an embodiment of the invention, in addition to the elements schematically indicated in Fig. 2, an external baffle or shadow can also be placed in front of the primary objective 5, although this is generally not necessary.

Preferably, the inner and outer surfaces 9E, 9I of the pupil stop 9, as well as the outer surface 7E and preferably the inner surface 7I of the field stop 7 are treated with an absorbing/reflecting or absorbing/diffusing treatment, in order to absorb a quantity of incident radiation equal to or greater than 90% and preferably equal to or greater than 95% and more preferably equal to or greater than 98%, and to reflect or diffuse the portion of radiation that is not absorbed. Preferably, the surface treatment is such as to obtain absorbing/reflecting surfaces instead of absorbing/diffusing surfaces. With these degrees of absorption, the diffusion of spurious radiation through the optics, originating from the region outside the field of view and which could reach the detector 3, is limited.

The relay system or relay optics 11 drastically reduces the residual radiation that can reach the detector and that is diffused by the edges of the pupil stop 9, by the walls of the primary objective and by the absorbing/reflecting stops positioned before the field stop and not shown in the diagram of Fig. 2.

Each of the four channels designed according to the optical diagram of Fig. 2 observes one fourth of the Earth's surface. Therefore, the field stop 7 of each of the four channels has such a shape as to let pass the portion of image of the respective fourth of the Earth's surface, intercepting the remaining portion of the image. Figs. 3A-3D schematically show an embodiment of the four field stops 7 utilized in the four channels. The letter C indicates the circumference that represents the contour of the image of the Earth observed by the four channels. The letter pairs SA, SB, SC, SD indicate for each of the four field stops the quadrants or 90° circular segments, through which passes the image portion of each channel. The four image portions are relayed on the four detectors 3 of the four channels, and a processing electronics will form the entire image from the four image portions.

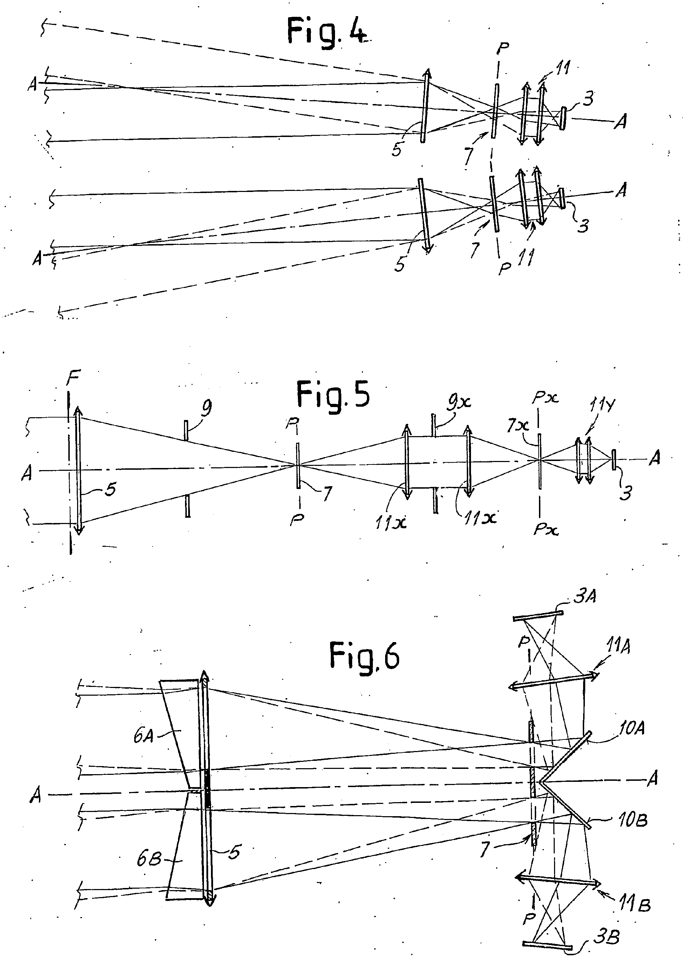

Fig. 4 shows the coupling between two of the channels 1 having the configuration shown in Fig. 2. The other two channels are coupled in identical manner and they have the same axis of symmetry, but their optical axes are on a plane that is orthogonal to the plane of the figure and passing through the axis of symmetry of the channels shown in Fig. 4.

With the diagram of Figs. 2 through 4, a single stage spatial filtering of stray light is achieved. The criterion can be extended to obtain a two-stage filtering in each channel, as shown in the diagram of Fig. 5, in which identical numbers indicate parts identical to those of the diagram of Fig. 2. The double filtering is obtained simply by repeating in series the filtering process carried out by the diagram of Fig. 2 and it increases the stray light rejection efficiency. In the diagram of Fig. 5, which again refers to one of the four channels, which present the same structure (with the exception of the shape of the field stops), downstream of the field stop 7 is located a focalization optics 11X with a pupil stop 9X, which focuses the image on a second image plane PX in which is positioned a second field stop 7X, with similar shape to the stop 7. Behind it is located a relay optics 11Y that relays the image on the detector 3.

In principle, if advantageous, it is possible to perform a filtering with any number n of stages, increasing at will the stray light rejection efficiency. Each stage will comprise a field stop and a relay or focalization optics.

Whatever the embodiment, with single or multiple filtering stage, in an appropriate point of the optical path of each channel is placed an interference filter. For example, the interference filter can be obtained on a planar surface positioned in front of the primary objective 5, as schematically indicated by the letter F in Fig. 2. The surface can be constituted by one of the faces of a planar-parallel plate, i.e. a plate with two planar faces that are mutually parallel.

According to a preferred embodiment of the invention, to increase the compactness of the optical system a single primary objective can be used, without altering the criterion of splitting the image into four (or more) fields of view and hence of splitting it into portions, to have angles of aperture of the individual fields of view that are smaller than or equal to the maximum acceptable variation of the angle of incidence on the interference filter provided for each field of view.

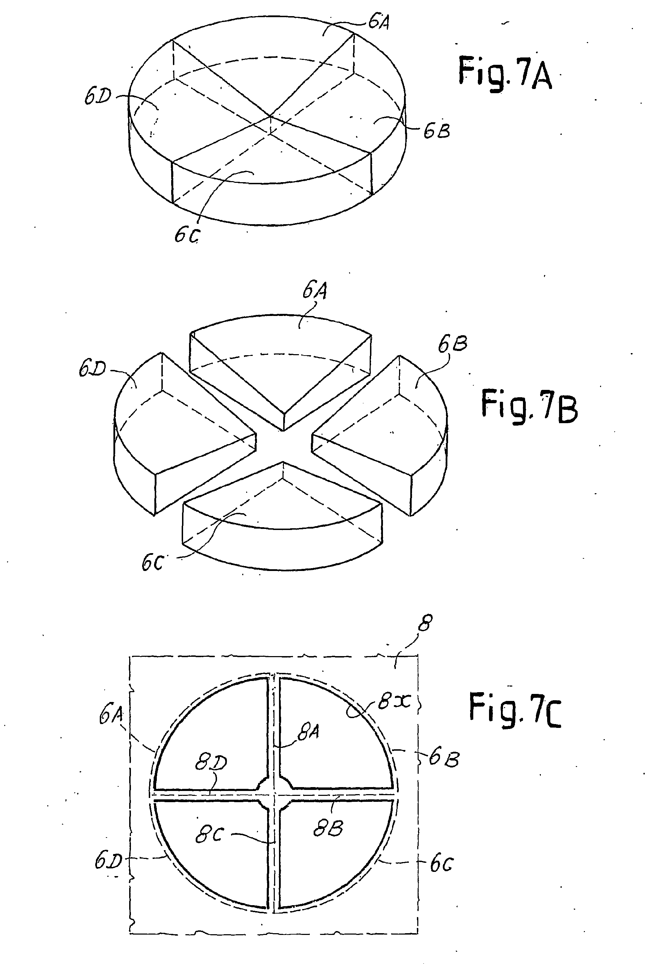

Fig. 6 shows a possible embodiment of a system with a single primary objective 5, in front of which can be positioned the interference filter designed and arranged in a manner that will be described below. A-A indicates the optical axis of the primary objective 5. In front of the primary objective 5 are positioned four optical wedges or refraction prisms, whereof two are visible in Fig. 6 and indicate by 6A and 6B. The arrangement of the prisms 6A-6D is illustrated in isolation and in axonometric view in Figs. 7A, 7B. In Fig. 7A, the wedges are close to each other, whilst in Fig. 7B they are positioned slightly separated from each other. Both configurations can be used. In front of each wedge or prism 6A-6D can be positioned an interference filter, obtained for example on a planar-parallel plate, i.e. a transparent plate with two planar and parallel faces, on one of which is deposited a treatment that forms the interference filter. Each plate (not shown) is positioned in front of the related prism in such a way as to minimize the variation of the angle of incidence of the rays coming from the Earth and which must pass through the related optical wedge.

To the primary objective 5 is associated a baffle or stop 8, a possible shape whereof is shown in Fig. 7C. It has a circular edge 8X and four obscured bands 8A, 8B, 8C, 8D positioned according to four orthogonal rays, which divide the entry pupil into four segments of circle or quadrants, as well as an obscured central region. The baffle or stop 8 serves to more efficiently separate the four regions defined by the prisms 6A-6D.

The stop or baffle 8 can also have a different shape, e.g. it could present four circular apertures positioned approximately in the central region of each optical wedge or prism 6A-6D, although said configuration increase the transverse size of the system. The greater advantage of the conformation of the stop 8 shown in Fig. 7C associated with the primary objective 5 relative to other shapes is due to the fact that the transparent regions of said stop are inscribed in a circle of minimum diameter for equal pupil area.

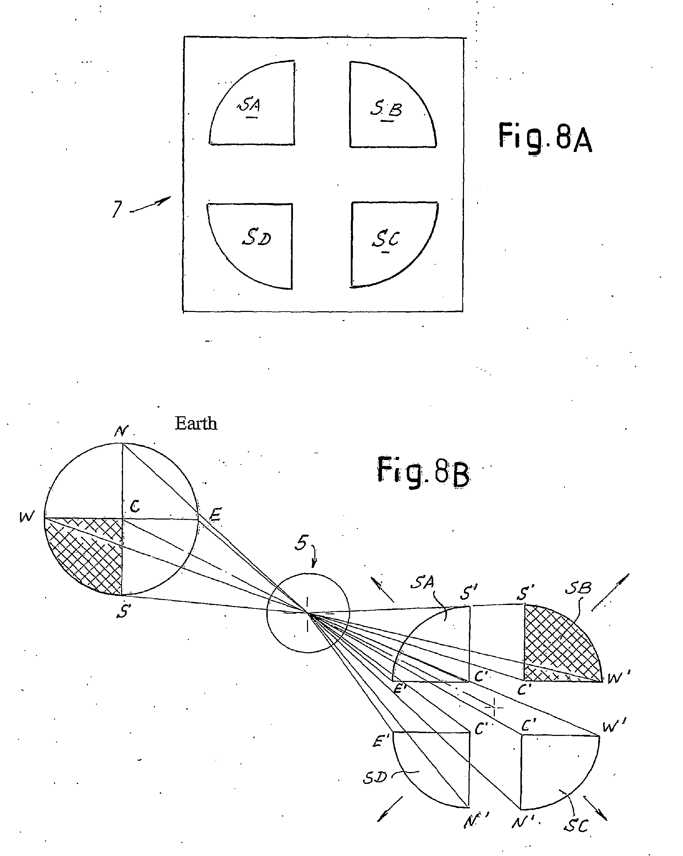

The primary objective thus reoriented in space forms in the focal plane the images of four fields of view, positioned symmetrically around the optical axis A-A. In the diagram of Fig. 6, the number 7 indicates the field stop positioned in the focal plane P of the primary objective 5. Unlike the embodiment described with reference to Figs. 2 through 5, providing a single primary objective 5 it is possible to provide a single field stop 7, which comprises four apertures that define four quadrants or 90° circular segments, arranged as schematically illustrated in Fig. 8A and indicated therein again by the references SA, SB, SC, SD. The image portion that is formed in each of the four circular segments SA-SD corresponds to a respective field of view and is then sent to a respective detector as described below through a relay optics for each channel, i.e. for each field of view. The four circular segments SA-SD are reversed relative to the image observed through the primary objective 5, because the latter rotates by 180° the image of the observed object.

. The diagram of Fig. 8B clarifies this optical behavior of the system. In Fig. 8B, the Earth is summarily indicated as it is shot from the primary objective 5. The letters N, S, W, E indicate the cardinal points North, South, West, East. The letter C designates the centre. In the focal plane P of the objective 5 is positioned the stop 7 with the 90° circle segment apertures SA, SB, SC, SD. On the focal plane P, the letters N', S', E' and W' indicate the images of the cardinal points N, S, E, W.

The quadrant SA contains the image portion defined by the points NWC, which passes through the respective prism 6A (not shown in Fig. 8B), the quadrant SB contains the image portion defined by the points SWC, which passes through the prism 6B and so on. The four quadrants are rotated by 180° relative to the observed object, by effect of the rotation impose by the objective 5 and they are mutually separate by effect of the optical wedges or optical prisms positioned in front of the objective.

Downstream of the field stop 7 are positioned four reflecting surfaces schematically represented by four mirrors 10A-10D, arranged in pyramid fashion with an appropriate inclination relative to the optical axis A-A of the primary objective. The mirrors 10A-10D constitute bending elements that deviate the beams coming from the four fields of view in an appropriate direction towards the respective detectors. In Fig. 6 are visible two of said mirrors, indicated by the references 10A and 10B, inclined by 45° relative to the axis A-A, but the mirrors could be positioned with other inclinations and they could possibly also be positioned with different inclinations from mirror to mirror. In an embodiment, the reflecting surface of the mirror can be positioned in such a way as to deviate the incident beam at 90° relative to the optical axis A-A.

Instead of four mirrors, different bending elements can be used, e.g. constituted by prisms in total reflection. In this case, the field stop 7 can be obtained on the anterior refracting faces of the prisms.

The reflecting surfaces of the four mirrors 10A-10D or other equivalent bending elements deviates the beams coming from the four quadrants of the field stop 7 towards four respective relay optics or relay objectives 11A-11D, only two of which (11A, 11B) are visible in Fig. 6, whilst the other two are positioned with the optical axes on a plane that is orthogonal to the figure. The relay optics focus the four images of the four segments or quadrants SA-SD on respective four detectors 3A-3D, two of which (3A, 3B) are visible in Fig. 6.

A monitoring system or device is thereby obtained with a single primary objective, a single field stop divided into four quadrants, and four channels to detect the four portions of image into which the Earth observed through the primary objective 5 has been subdivided.

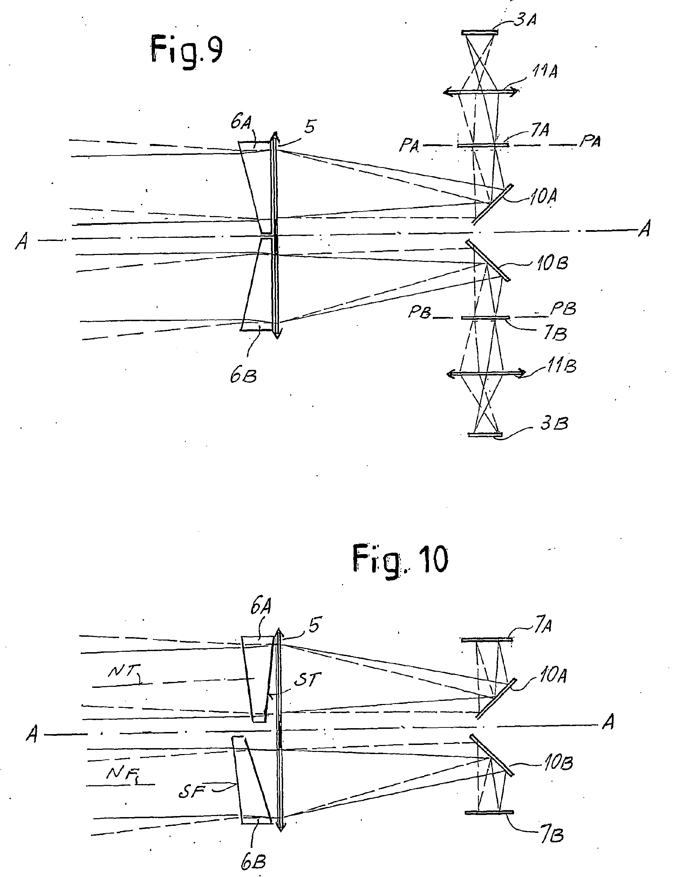

Fig. 9 shows a modified embodiment, in which identical numbers indicate parts that are identical or correspond to those of the system of Fig. 6. In this embodiment, the mirrors or other equivalent bending elements 10A-10D are positioned upstream of the field stop 7 and hence the incoming beams from the four fields of view are separated by the bending elements and each of them is addressed towards a respective field stop 7A-7D. Two of said field stops (7A-7B) are visible in Fig. 9, whilst the others are on two planes which are parallel to the plane of the figure. Each of the four field stops 7A-7D is in the focal plane of the primary objective 5 and has the shape shown in Figs. 3A-3D, with the quadrants SA-SD positioned in co-ordinated manner relative to the beams coming from the corresponding four portions of the image relayed by the primary objective 5.

With each of the field stops 7A-7D is associated a respective relay optics or relay objective 11A-11 D. Of these relay optics, two are visible in the diagram of Fig. 9 and they are designated 11A, 11B. Each of the optics 11A - 11D relays the corresponding image of a quadrant on a respective detector 3A-3D, two of which are visible in Fig. 9 and designated 3A, 3B.

The refraction prisms or optical wedges 6A-6D can be oriented in such a way as to offer the least possible variation of the angle of incidence on one of the faces (front or rear) in order to allow the optimal deposition of the interference treatment forming the band-pass filter on the respective surface of the prism. The optimal position of the filter is the input of the optics, in parallel beams, i.e. in front of the primary objective 5, where the angles of incidence are minimal. Appropriately, each filter is positioned in such a way as to be oriented orthogonally to the median direction of the beams of the respective field of view.

To achieve this result, according to one embodiment of the invention, deflection prisms can be constructed with the input face orthogonal to the median ray incident on the wedge. On this face the interference filter can be constructed. In a different and preferred embodiment, the filter is deposited on the inner or rear face of the prism, which in this case will be oriented orthogonally to the median ray of the beam.

These two possible alternatives are shown respectively in the lower and upper part (for the prisms 6B and 6A respectively) of the diagram of Fig. 10. The lower optical wedge or optical prism 6B is positioned with its own front or anterior face SF orthogonal to the median ray of the incoming beam in the respective field of view, defined by the quadrant in which the wedge 6B is located. The reference NF indicates the straight line orthogonal to the surface SF, which straight line is parallel to the median ray of the beam. The upper optical wedge or optical prism 6A is positioned, instead, with its own rear or posterior surface ST orthogonal to the median ray of the incoming beam in the respective portion of the primary objective 5. The reference NT indicates the straight line orthogonal to the surface ST, parallel to the median ray of the beam emerging from the wedge. The embodiment illustrated with reference to the optical prism 6B is preferable, because the treatment that forms the interference filter is in a region that is protected by the prism itself.

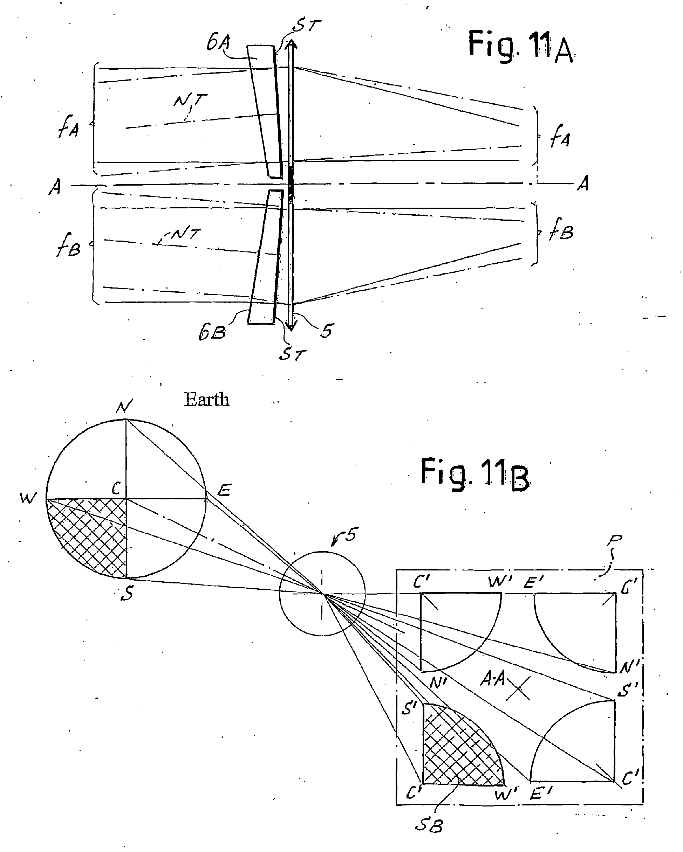

According to an improved embodiment of the invention, the observation channels can be reversed by 180°, obtaining optical wedges or optical prisms 6A-6D that are thinner and hence lighter and less bulky. An embodiment of this kind is schematically indicated in Fig. 11A. The optical prisms 6A, 6B are oriented in such a way as to present the rear or posterior faces ST orthogonal to the median ray of each beam of the respective field of view. The references fA and fB indicate the beams incoming into the two prisms 6A, 6B. The treatment that realizes the interference filter is then performed on the rear surface ST of each of said prisms, in view of the description made with reference to Fig. 10. The prism 6A is oriented in such a way as to point downwards and the prism 6B is oriented in such a way as to point upwards. In this way, there is an inversion of the channels, i.e. of the fields of view' corresponding to the four prisms. Each field of view is translated diagonally relative to the optical axis of the objective. Fig. 11B schematically shows the behavior of the optical system in this case. Similarly to what is shown in Fig. 8B, in Fig. 11B the Earth is represented, with the four cardinal points North (N), South (S), East (E) and West (W), observed through the primary objective 5. On the focal plane P of the objective is located the field stop 7 which presents four apertures SA-SD corresponding to the four fields of view. On the focal plane, the letters N', S', E' and W' respectively indicate the images of the cardinal points N, S, E, W. With respect to the situation of Fig. 8B, each quadrant is translated diagonally to assume the symmetric position relative to the optical axis A-A of the primary objective 5.

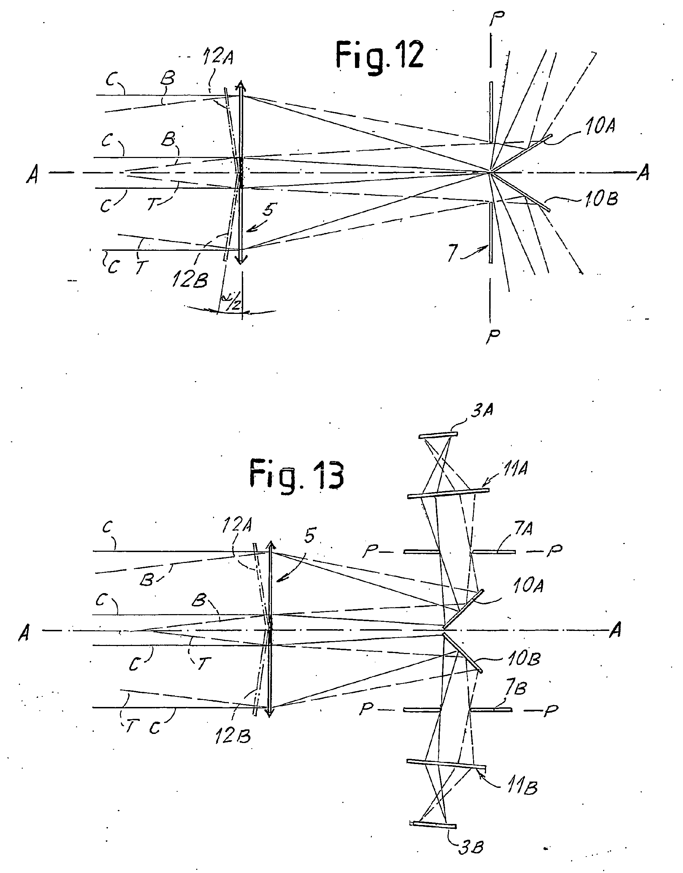

Figs. 12 and 13 show two embodiments of the invention without the use of the optical wedges or optical prisms 6A-6D. Identical numbers indicate parts that are identical or equivalent to those of the previous embodiments. In the illustrated example, with the primary objective 5 are associated four interference filters, two of which are indicated by the references 12A and 12B and shown in Figs. 12 and 13. The four interference filters are positioned on surfaces inclined by an angle equal to half the aperture of the field of view α, in order to minimize or anyhow to reduce - for each portion of the observed image, i.e. for each of the four quadrants - the variation of the angle of incidence of the rays coming from the Earth on the respective interference filter. The reference C indicates the rays coming from the centre of the image, i.e. from the centre of the Earth, whilst T and B respectively indicate the rays coming from the upper edge and from the lower edge of the Earth observed through the primary objective 5. Said primary objective thus collects, in this case as well, an image split into four portions, each of which is filtered by one of the four interference filters 12A-12D.

In the configuration of Fig. 12, a field stop 7 is provided in the focal plane 7, whilst the separation of the fields of view for the various channels is obtained by means of mirrors or other equivalent bending elements 10A-10D positioned behind the field stop 7, two of which (10A, 10B) are visible in Fig. 12. The beams reflected by the mirrors 10A-10D pass through respective relay optics 11A-11 D which relay the image on respective sensors or detectors 3A-3D.

The field stop 7 can present four apertures arranged according to four 90° segments of circle, close to each other and separated by shielded areas positioned according to four rays at 90°. However, this is not strictly necessary, because the field stop 7 could be a stop with circular aperture, and the subdivision of the four fields of view can be obtained directly and solely by means of the four mirrors 10A-10D or other bending elements.

The arrangement of Fig. 12 can present some difficulties in the separation of the fields of view through the four mirrors 10A-10D which must converge in a vertex at the centre of the beam. Therefore, to this configuration can be preferred the one illustrated in Fig. 13, described below, where the separation of the fields of view takes place upstream of the focal plane. However, a solution of the kind illustrated in Fig. 12 can be used advantageously for example when the device is divided into two fields of view and two channels, instead of four. In this case, two substantially identical devices can be provided, in each of which are defined two fields of view.

In the configuration of Fig. 13 the separation of the channels is accomplished by means of mirrors 10A-10D upstream of the field stop 7, with a similar solution to the one shown in Fig. 9. Hence, in this case there are four field stops 7A-7D, each of which has a similar shape to the one shown in Figs. 3A-3D. Behind the field stops 7A-7D are located the relay optics 11A-11D and the detectors 3A-3D.

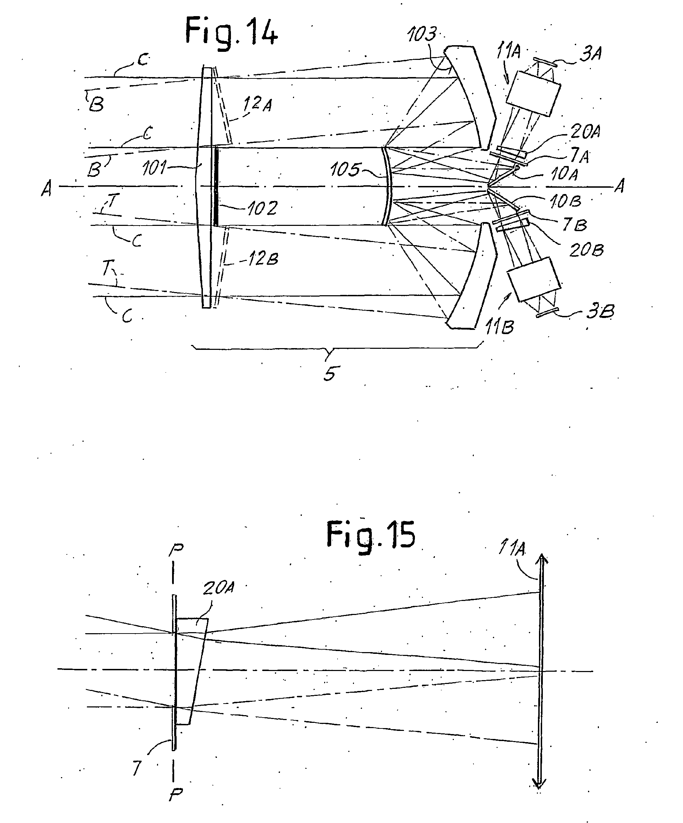

Figs. 14 and 15 show a constructive diagram of an embodiment of a device based on the concepts described above with reference to the outline diagrams of Figs. 6 and 13 and in particular using a configuration with a rotation of 180° and translation of the channels and without prisms or optical wedges in front of the primary objective and with four field stops positioned downstream of four bending elements, that address the beams of the four fields of view towards the respective relay optics and the respective detectors.

With reference to Fig. 14, in an embodiment the primary objective, still indicated in its entirety by the reference number 5, is constituted by a Schmidt-Cassegrain chamber with a Schmidt plate 101 positioned in the centre of curvature of a concave primary spherical mirror 103. To the Schmidt plate 101 is associated a shielding of the type indicated in Fig. 7C, whioh obscures the central region forming a central stop and splits the plate in four portions, preferably with 90° segments of circle. The reference number 105 indicates a spherical or aspherical convex secondary mirror, for example an aspherical hyperboloid, which reflects the incoming beams towards four reflecting mirrors or four faces of a prism with total reflection or other arrangement of equivalent bending elements. In the diagram of Fig. 14, two of the four mirrors are visible and indicated by the references 10A, 10B.

The mirrors 10A-10D reflect the beams of the four fields of view towards respective four field stops 7A-7D, two of which (7A, 7B) are visible in Fig. 14. Said four stops have a shape similar to the one shown in Figs. 3A-3D. The for stops 7A-7D are positioned in the focal plane of the primary objective 5. Behind each of the field stops 7A-7D are positioned respective relay optics 11A-11D, two of which (11A, 11 B) are visible in Fig. 14. The optics 11A-11D relay the four images on respective four detectors 3A-3D, two of which (3A, 3B) are indicated in fig. 14.

In the illustrated diagram, optical wedges are also shown behind the field stops 7A-7D, to adapt the pupil. In fact, as is understood in particular from the diagram of Fig. 15 (in which, by way of example, are shown the field stop 7A and the related relay optics 11A) the beams that arrive on the field stop are not symmetrical relative to the normal to the image surface. This would force the relay optics to work in conditions poorly suited to its optimization. The optical wedge indicated by the reference 20A in Fig. 15 serves the purpose of making the central rays of the beams parallel to the optical axis of the relay objective or relay optics 11A. Otherwise, the relay objective should be designed to work off axis, with f/number at least halved and this makes the design more challenging.

The illustrated configuration requires the insertion of four inclined planar-parallel plates, which support the interference filter in front of each channel or field of view. In Fig. 14, the references 12A, 12B summarily indicate two of said plates, located by way of example behind the Schmidt plate 101. They are inclined by an angle equal to half the angle of view, according to the criteria already described previously, in order to minimize the variation of the angle of incidence of the rays incoming into each channel, i.e. in each of the four portions into which the Schmidt plate 101 is subdivided. It is also possible to place the planar-parallel plates in other positions, e.g. in front of the Schmidt plate 101.

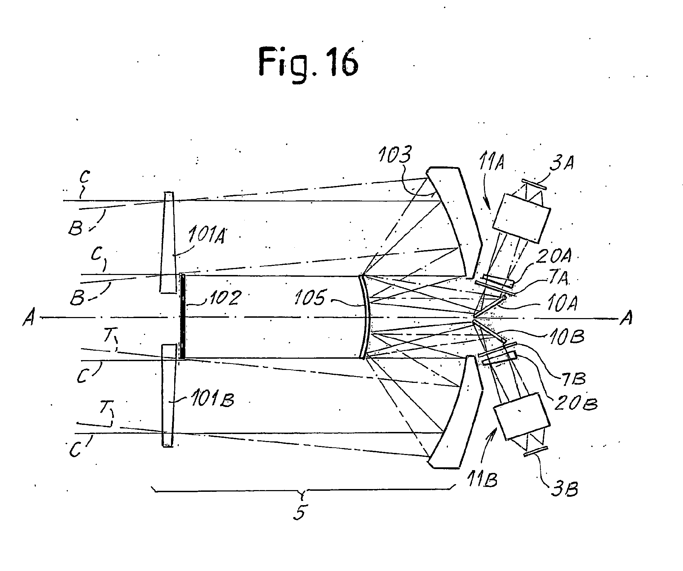

The diagram of Fig. 16 represents a constructive solution similar to that of Fig. 14, which differs therefrom in that the Schmidt plate , instead of being monolithic, is subdivided into four portions, corresponding to the four channels of the device. Of these four portions, two are visible in Fig. 16 and indicated by the references 101A, 101B. They are inclined by half of the angle of view, e.g. 4°, relative to a plane orthogonal to the optical axis A-A. In this way, the interference filter can be obtained by deposition directly on the planar (rear) face of the four portions 101A-101D into which the Schmidt plate is divided, avoiding the need to position a planar-parallel plate to support the filter for each channel. The remaining parts of the device of Fig. 16 are identical or equivalent to those of the solution of Fig. 14 and they are indicated by the same reference numbers.

Constructing the primary objective with a Schmidt-Cassegrain configuration enables simultaneously to obtain small f/numbers, extensive field of view, good correction of aberrations and extraction of the focal plane.

According to a different embodiment, given the very narrow working spectral band, it is possible to construct the primary objective and the deviation of the refraction prism with a single holographic or diffractive element. However, the holographic element is generally less efficient and it can be poorly suited to spatial applications, whilst the diffractive element can in itself generate stray light because of the discontinuity in the surface.

The same considerations apply for the relay optics.

In the final analysis, the construction with classic optical elements presents fewer risks and difficulties than the construction with diffractive elements.

It is understood that the drawing shows only non limiting embodiments of the invention, which can change vary in its forms, arrangements, selection of the components and other factors that do not modify the concept constituting the basis of the invention. Any presence of reference numbers in the appended claims has the purpose of facilitating their reading in light of the above description and of the accompanying drawings and in no way limits the scope of protection.

## Claims

1. Device for monitoring lightnings comprising a plurality of detectors (3; 3a, 3b) each of which receives a portion of an image observed by the device, **characterized in that** along the optical path between at least one primary objective (5) and each of said detectors is positioned at least one field stop (7; 7a; 7b) positioned substantially in the focal plane of said primary objective, which is adapted to select for a respective detector a portion of the image observed by the device, for each detector being provided a relay optics (11; 11a, 11b) to relay each of said image portions from said at least one field stop towards the corresponding detector.

2. Device according to claim 1, **characterized in that** it comprises at least one band-pass filter centered on the band corresponding to the spectral marking of the lightnings.

3. Device according to claim 2, **characterized in that** said filter is an interference filter.

4. Device according to claim 1 or 2 or 3, **characterized by** a shared primary objective whereto is associated said plurality of detectors, a respective field of view corresponding to each of said detectors.

5. Device according to claim 4, **characterized in that** with each of said fields of view is associated a respective bending element that deviates the beams coming from the shared primary objective towards a respective detector.

6. Device according to claim 4 or 5, **characterized in that** with said primary objective are associated band-pass filters in a number corresponding to said fields of view.

7. Device according to claim 6, **characterized in that** each band-pass filter is constituted by an interference filter obtained on a planar surface substantially orthogonal to the median ray of each field of view.

8. Device according to claim 7, **characterized in that** in front of said primary objective are positioned optical wedges that divide the objective into portions corresponding to said fields of view, said optical wedges presenting mutually different inclinations with respect to the optical axis of the primary objective.

9. Device according to claim 8, **characterized in that** on a substantially planar surface of each of said optical wedges is obtained a respective interference filter.

10. Device according to one or more of the claims 4 through 9, **characterized in that** with said primary objective is associated a baffle or stop for shielding the discontinuity between adjacent portions into which the primary objective is divided, corresponding to said fields of vies.

11. Device according to one or more of the claims 4 through 10, **characterized in that** between said primary objective and said detectors is provided a single field stop, positioned substantially in the focal plane of the primary objective.

12. Device according to claim 11, **characterized in that** said field stop comprises a plurality of apertures, each one corresponding to one of said fields of view and of said detectors.

13. Device according to claim 11 or 12, **characterized in that** behind said field stop is positioned a plurality of bending elements in order to deviate the beams coming from said fields of view from the field stop towards said detectors, between each bending element and each detector being positioned at least one relay optics.

14. Device according to one or more of the claims 4 through 10, **characterized in that** between said shared primary objective and said detectors is positioned a plurality of bending elements, in order to deviate the beams of radiation coming from said primary objective towards a plurality of field stops, positioned substantially in the focal plane of the primary objective and to each of which is associated a respective detector, between each field stop and each detector being positioned at least one corresponding relay optics.

15. Device according to one or more of the claims 4 through 14, **characterized in that** said shared primary objective comprise a Schmidt plate, a concave primary mirror and a convex secondary mirror.

16. Device according to claim 15, **characterized in that** with said Schmidt plate is associated a stop that delimits a plurality of fields of view corresponding to said detectors.

17. Device according to claim 15 or 16, **characterized in that** with said Schmidt plate are associated interference filters.

18. Device according to claim 17, **characterized in that** to said Schmidt plate are associated planar surfaces on which said interference filters are provided, each of said surfaces being substantially orthogonal to the median
ray of the respective field of view.

19. Device according to claim 15, **characterized in that**: said Schmidt plate is subdivided into a plurality of portions, each of which presents a substantially planar surface whereon a corresponding interference filter is obtained; said portions into which the Schmidt plate is divided define corresponding fields of view, to each of which one of said detectors is associated; and each portion of the Schmidt plate is oriented in such a way that the respective planar surface, whereon the interference filter is obtained, is substantially orthogonal to the median ray of the corresponding field of view.

20. Device according to one or more of the claims 15 through 19, **characterized in that** said Schmidt plate, said concave mirror and said convex mirror define a Schmidt-Cassegrain chamber.

21. Device according to one or more of the previous claims, **characterized in that** it comprises four detectors.

22. Device according to claim 1, **characterized in that** it comprises a plurality of primary objectives, in the focal plane of each of which is positioned a respective field stop, between each field stop and the corresponding detector being positioned a relay optics.

## Patentansprüche

1. Vorrichtung zur Beobachtung von Blitzen, die eine Anzahl von Detektoren (3; 3a, 3b) umfasst, von denen jeder einen Teil eines Bildes, das von der Vorrichtung beobachtet wird, empfängt, ***dadurch gekennzeichnet,* dass** entlang des Strahlengangs zwischen mindestens einem primären Objektiv (5) und jedem der Detektoren mindestens eine Feldblende (7; 7a, 7b) angeordnet ist, die im Wesentlichen in der Brennebene des primären Objektivs angeordnet ist, die ausgelegt ist, für einen jeweiligen Detektor einen Teil des Bildes, das durch die Vorrichtung beobachtet wird, auszuwählen, wobei für jeden Detektor eine Relaisoptik (11; 11a, 11b) vorgesehen ist, um jeden der Bildteile von der mindestens einen Feldblende in Richtung des entsprechenden Detektors weiterzuleiten.

2. Vorrichtung gemäß Anspruch 1, ***dadurch gekennzeichnet,* dass** sie mindestens ein Bandpassfilter umfasst, das auf das Band zentriert ist, das der Spektralmarkierung der Blitze entspricht.

3. Vorrichtung gemäß Anspruch 2, ***dadurch gekennzeichnet,* dass** das Filter ein Interferenzfilter ist.

4. Vorrichtung gemäß Anspruch 1 oder 2 oder 3, ***gekennzeichnet durch*** ein gemeinsames primäres Objektiv, mit dem die Anzahl von Detektoren verbunden ist, wobei ein jeweiliges Bildfeld jedem der Detektoren entspricht.

5. Vorrichtung gemäß Anspruch 4, ***dadurch gekennzeichnet,* dass** mit jedem der Bildfelder ein jeweiliges Biegeelement verknüpft ist, das die Strahlen, die von dem gemeinsamen primären Objektiv kommen, in Richtung eines jeweiligen Detektors umlenkt.

6. Vorrichtung gemäß Anspruch 4 oder 5, ***dadurch gekennzeichnet,* dass** mit dem primären Objektiv Bandpassfilter in einer Anzahl verknüpft sind, die den Bildfeldern entsprechen.

7. Vorrichtung gemäß Anspruch 6, ***dadurch gekennzeichnet,* dass** jedes Bandpassfilter durch ein Interferenzfilter aufgebaut ist, das auf einer ebenen Oberfläche erhalten wird, die im Wesentlichen senkrecht zu dem Mittelstrahl von jedem Bildfeld ist.

8. Vorrichtung gemäß Anspruch 7, ***dadurch gekennzeichnet,* dass** vor dem primären Objektiv optische Keile angeordnet sind, die das Objektiv in Teile unterteilen, die den Bildfeldern entsprechen, wobei die optischen Keile wechselseitig unterschiedliche Neigungen hinsichtlich der Sehachse des Primärobjektivs zeigen.

9. Vorrichtung gemäß Anspruch 8, ***dadurch gekennzeichnet,* dass** auf einer im Wesentlichen ebenen Oberfläche von jedem der optischen Keile ein jeweiliges Interferenzfilter erhalten wird.

10. Vorrichtung gemäß einem oder mehreren der Ansprüche 4 bis 9, ***dadurch gekennzeichnet,* dass** das primäre Objektiv mit einer Streulichtblende oder Blende zum Abschirmen der Diskontinuität zwischen angrenzenden Teilen, in die das primäre Objektiv unterteilt ist, verknüpft ist, entsprechend den Bildfeldern.

11. Vorrichtung gemäß einem oder mehreren der Ansprüche 4 bis 10, ***dadurch gekennzeichnet,* dass** zwischen dem primären Objektiv und den Detektoren eine einzige Feldblende vorgesehen ist, die im Wesentlichen in der Brennebene des primären Objektivs angeordnet ist.

12. Vorrichtung gemäß Anspruch 11, ***dadurch gekennzeichnet,* dass** die Feldblende eine Anzahl von Blenden umfasst, von denen jede einem der Bildfelder und der Detektoren entspricht.

13. Vorrichtung gemäß Anspruch 11 oder 12, ***dadurch gekennzeichnet,* dass** hinter der Feldblende eine Anzahl von Biegeelementen angeordnet ist, um die Strahlen, die von den Bildfeldern der Feldblenden in Richtung der Detektoren kommen umzulenken, wobei zwischen jedem Biegeelement und jedem Detektor mindestens eine Relaisoptik angeordnet ist.

14. Vorrichtung gemäß einem oder mehreren der Ansprüche 4 bis 10, ***dadurch gekennzeichnet,* dass** zwischen dem gemeinsamen primären Objektiv und den Detektoren eine Anzahl von Biegeelementen angeordnet ist, um die Strahlen von Strahlung, die von dem primären Objektiv in Richtung einer Anzahl von Feldblenden kommt, umzulenken, im Wesentlichen in der Brennebene des primären Objektivs angeordnet und wobei mit jedem davon ein jeweiliger Detektor verknüpft ist und zwischen jeder Feldblende und jedem Detektor mindestens eine entsprechende Relaisoptik angeordnet ist.

15. Vorrichtung gemäß einem oder mehreren der Ansprüche 4 bis 14, ***dadurch gekennzeichnet,* dass** das gemeinsame primäre Objektiv eine Schmidt-Platte, einen konkaven Primärspiegel und einen konvexen Sekundärspiegel umfasst.

16. Vorrichtung gemäß Anspruch 15, ***dadurch gekennzeichnet,* dass** mit der Schmidt-Platte eine Blende verknüpft ist, die eine Anzahl von Bildfeldern, die den Detektoren entsprechen, begrenzt.

17. Vorrichtung gemäß Anspruch 15 oder 16, ***dadurch gekennzeichnet,* dass** mit der Schmidt-Platte Interferenzfilter verknüpft sind.

18. Vorrichtung gemäß Anspruch 17, ***dadurch gekennzeichnet,* dass** mit der Schmidt-Platte ebene Oberflächen verknüpft sind, auf denen die Interferenzfilter vorgesehen sind, wobei jede der Oberflächen im Wesentlichen senkrecht zu dem Mittelstrahl des jeweiligen Bildfeldes ist.

19. Vorrichtung gemäß Anspruch 15, ***dadurch gekennzeichnet,* dass**: die Schmidt-Platte in eine Anzahl von Teilen untertellt ist, von denen jeder eine im Wesentlichen ebene Oberfläche zeigt, auf der ein entsprechendes Interferenzfilter erhalten wird; die Teile, In welche die Schmidt-Platte unterteilt ist, entsprechende Bildfelder definieren, von denen jedes mit einem der Detektoren verknüpft ist; und jeder Teil der Schmidt-Platte auf eine solche Weise orientiert ist, dass die jeweilige ebene Oberfläche, auf der das Interferenzfilter erhalten wird, im Wesentlichen orthogonal zu dem Mittelstrahl des entsprechenden Bildfeldes ist.

20. Vorrichtung gemäß einem oder mehreren der Ansprüche 15 bis 19, ***dadurch gekennzeichnet,* dass** die Schmidt-Platte, der Konkavspiegel und der Konvexspiegel eine Schmidt-Cassegrain-Kammer definieren.

21. Vorrichtung gemäß einem oder mehreren der vorhergehenden Ansprüche, ***dadurch gekennzeichnet,* dass** sie vier Detektoren umfasst.

22. Vorrichtung gemäß Anspruch 1, ***dadurch gekennzeichnet,* dass** sie eine Anzahl von Primärobjektiven umfasst, in deren Brennebene jeweils eine jeweilige Feldblende angeordnet ist, wobei zwischen jeder Feldebene und dem entsprechenden Detektor eine Relaisoptik angeordnet ist.

## Revendications

1. Dispositif de surveillance des éclairs comprenant une pluralité de détecteurs (3 ; 3a, 3b), dont chacun reçoit une partie d'une image observée par le dispositif, **caractérisé en ce que** le long du chemin optique entre au moins un objectif primaire (5) et chacun desdits détecteurs est positionné au moins un diaphragme de champ (7 ; 7a, 7b) positionné sensiblement dans le plan focal dudit objectif primaire, qui est adapté pour sélectionner pour un détecteur respectif une partie de l'image observée par le dispositif, pour chaque détecteur étant fournie une optique de relais (11 ; 11a, 11b) pour relayer chacune desdites parties d'image dudit au moins un diaphragme de champ vers le détecteur correspondant.

2. Dispositif selon la revendication 1, **caractérisé en ce qu'**il comprend au moins un filtre passe-bande centré sur la bande correspondant à la trace spectrale des éclairs.

3. Dispositif selon la revendication 2, **caractérisé en ce que** ledit filtre est un filtre d'interférence.

4. Dispositif selon la revendication 1 ou 2 ou 3, **caractérisé par** un objectif primaire partagé auquel est associée ladite pluralité de détecteurs, un champ de vision respectif correspondant à chacun desdits détecteurs.

5. Dispositif selon la revendication 4, **caractérisé en ce qu'**avec chacun desdits champs de vision est associé un élément de flexion respectif qui dévie les faisceaux provenant de l'objectif primaire partagé vers un détecteur respectif.

6. Dispositif selon la revendication 4 ou 5, **caractérisé en ce qu'**avec ledit objectif primaire sont associés des filtres passe-bande dans un nombre correspondant auxdits champs de vision.

7. Dispositif selon la revendication 6, **caractérisé en ce que** chaque filtre passe-bande est constitué par un filtre d'interférence obtenu sur une surface plane sensiblement orthogonale au rayon médian de chaque champ de vision.

8. Dispositif selon la revendication 7, **caractérisé en ce qu'**en face dudit objectif primaire sont positionnés des coins optiques qui divisent l'objectif en parties correspondant auxdits champs de vision, lesdits coins optiques présentant des inclinaisons mutuellement différentes par rapport à l'axe optique de l'objectif primaire.

9. Dispositif selon la revendication 8, **caractérisé en ce que** sur une surface sensiblement plane de chacun desdits coins optiques est obtenu un filtre d'interférence respectif.

10. Dispositif selon une ou plusieurs des revendications 4 à 9, **caractérisé en ce qu'**avec ledit objectif primaire est associé une chicane ou un diaphragme pour rompre la discontinuité entre des parties adjacentes dans lesquelles l'objectif primaire est divisé, correspondant auxdits champs de vision.

11. Dispositif selon une ou plusieurs des revendications 4 à 10, **caractérisé en ce qu'**entre ledit objectif primaire et lesdits détecteurs est prévu un diaphragme de champ unique, positionné sensiblement dans le plan focal de l'objectif primaire.

12. Dispositif selon la revendication 11, **caractérisé en ce que** ledit diaphragme de champ comprend une pluralité d'ouvertures, chacune correspondant à l'un desdits champs de vision et desdits détecteurs.

13. Dispositif selon la revendication 11 ou 12, **caractérisé en ce que** derrière ledit diaphragme de champ est positionnée une pluralité d'éléments de flexion en vue de dévier les faisceaux provenant desdits champs de vision dudit diaphragme de champ vers lesdits détecteurs, entre chaque élément de flexion et chaque détecteur étant positionnée au moins une optique de relais.

14. Dispositif selon une ou plusieurs des revendications 4 à 10, **caractérisé en ce qu'**entre ledit objectif primaire et lesdits détecteurs est positionnée une pluralité d'éléments de flexion, en vue de dévier les faisceaux de rayonnement provenant dudit objectif primaire vers une pluralité de diaphragmes de champ, positionnés sensiblement dans le plan focal de l'objectif primaire et à chacun desquels est associé un détecteur respectif, entre chaque diaphragme de champ et chaque détecteur étant positionnée au moins une optique de relais correspondante.

15. Dispositif selon une ou plusieurs des revendications 4 à 14, **caractérisé en ce que** ledit objectif primaire partagé comprend une plaque de Schmidt, un miroir primaire concave et un miroir secondaire convexe.

16. Dispositif selon la revendication 15, **caractérisé en ce qu'**avec ladite plaque de Schmidt est associé un diaphragme qui délimite une pluralité de champs de vision correspondant auxdits détecteurs.

17. Dispositif selon la revendication 15 ou 16, **caractérisé en ce qu'**avec ladite plaque de Schmidt sont associés des filtres d'interférence.

18. Dispositif selon la revendication 17, **caractérisé en ce qu'**avec ladite plaque de Schmidt sont associées des surfaces planes sur lesquelles lesdits filtres d'interférence sont prévus, chacune desdites surfaces étant sensiblement orthogonale au rayon médian du champ de vision respectif.

19. Dispositif selon la revendication 15, **caractérisé en ce que** : ladite plaque de Schmidt est sous-divisée en une pluralité de parties, dont chacune présente une surface sensiblement plane sur laquelle un filtre d'interférence correspondant est obtenu ; lesdites parties dans lesquelles la plaque de Schmidt est divisée définissent des champs de vision correspondants, à chacun desquels est associé l'un desdits détecteurs ; et chaque partie de la plaque de Schmidt est orientée de telle manière que la surface plane respective, sur laquelle le filtre d'interférence est obtenu, est sensiblement orthogonale au rayon médian du champ de vision correspondant.

20. Dispositif selon une ou plusieurs des revendications 15 à 19, **caractérisé en ce que** ladite plaque de Schmidt, ledit miroir convexe et ledit miroir concave définissent une chambre de Schmidt-Cassegrain.

21. Dispositif selon une ou plusieurs des revendications précédentes, **caractérisé en ce qu'**il comprend quatre détecteurs.

22. Dispositif selon la revendication 1, **caractérisé en ce qu'**il comprend une pluralité d'objectifs primaires, dans le plan focal de chacun desquels est positionné un diaphragme de champ respectif, entre chaque diaphragme de champ et le détecteur correspondant étant positionnée une optique de relais.
